# EUROPEAN PATENT APPLICATION

(11) **EP 0 951 198 A2**
(43) Date of publication of application: **20.10.1999**
(21) Application number: 99104883.6
(22) Date of filing: 11.03.1999
(51) Int. Cl.: H04Q 11/04, H04L 12/46, H04L 12/28

(54) **IP multicast over a wireless ATM network**

(30) Priority: 14.04.1998 US 81628 P; 16.09.1998 US 154507
(71) Applicant: NEC CORPORATION, Tokyo (JP)
(72) Inventor: Ansari, Furquan c/o NEC USA Inc., Princeton, New Jersey 08540 (US); Acharya, Arup c/o NEC USA Inc., Princeton, New Jersey 08540 (US); Narasimhan, Partha c/o NEC USA Inc., Princeton, New Jersey 08540 (US)
(74) Representative: Patentanwälte Dipl.-Ing. R. Splanemann Dr. B. Reitzner Dipl.-Ing. K. Baronetzky

(57) **Abstract**

The present invention provides IP multicast using over wireless ATM. A wireless ATM system consists of a fixed core network and a shared wireless access link for mobile terminals. Unlike point-to-point ATM links within the fixed/wired network, wireless ATM link uses a common VC space for all mobile terminals and the medium access (MAC) protocol allows multiple access on the downlink, but supports only unicast transmission on the uplink. This invention also provides how IP multicast can be naively supported on such WATM links through specific extensions to the Internet Group Management Protocol (IGMP). In addition, a cell-level error recovery scheme at the DLC (data link, control) layer is provided to enhance the (IP) packet-level output of the transport layer.

## Description

### I. DESCRIPTION OF THE INVENTION

This application claims priority from co-pending U.S. Provisional Patent Application Serial No. 60/081,628 filed on April 14, 1998.

### IA. FIELD OF THE INVENTION

This invention relates to wireless Asyncronous Transfer Mode (ATM) networks. Specifically, it deals with computer communications and networking; and in particular to a method of transmitting - on a wireless ATM network - a packet formed in accordance with a protocol different from ATM and to a network system for transmitting the packet.

### IB. BACKGROUND

Wireless ATM has been an active area of research and development. ATM Forum and ETSI, applicable bodies, are standarding wireless ATM. Such a wireless ATM is useful for providing broadband wireless services. A conventional wireless ATM system, e.g. WATMnet comprises two major components: (a) a fixed core network and (b) shared wireless access link used for extending ATM cell transmission to mobile hosts. See D. Raychaudhuri, L. J. French, R. J. Siracusa, S. K. Biswas, R. Yuan, P. Narasimhan, and C. A. Johnston, "WATMnet: A prototype wireless ATM system for multimedia personal communication", *IEEE Journ. Select. Areas Commun.*, Jan. 1997.

Other conventional wireless ATM systems have been described in D. Raychaudhuri, L. J. French, R. J. Siracusa, S. K. Biswas, R. Yuan, P. Narasimhan, and C. A. Johnston, "WATMnet: A prototype wireless ATM system for multimedia personal communication", *IEEE Journ. Select. Areas Commun.*, Jan. 1997.

Techniques for providing mobility support through conventional mobile ATM have been described in A. Acharya, J. Li, B. Rajagopalan, and D. Raychaudhuri, "Mobility management in wireless ATM networks", *IEEE Commun. Mag.*, 1997. Providing Internet Protocol (IP) support within a core network is described in Arup Acharya, Rajiv Dighe, and Furquan Ansari, "IP switching over fast ATM cell transport (IPSOFACTO): Switching multicast flows", *Proc. IEEE Globecom,* 1997 and Arup Acharya, Rajiv Dighe, and Furquan Ansari, "A framework for IP switching over fast ATM cell transport (IPSOFACTO)"*, Proc. SPIE,* 1997.

A method for IP switching over ATM and an embodiment of IPSOFACTO is described in detail in copending U.S.Patent Application No. 08/771,559 by Acharya et al. and U. S. Patent Application No. 09/080,208 by Acharya et al., which are incorporated herein by reference.

### IB1. IPSOFACTO

IPSOFACTO (IP Switching Over Fast ATM Cell Transport) is an embodiment of a methodology for mapping IP flows to a switched path (virtual connection) within a network of ATM switches. Unlike standard IP-over-ATM techniques described generally in James V. Luciani, Dave Katz, David Piscitello, and Bruce Cole, "NBMA next hop resolution protocol (NHRP)", *Internet Draft*, *jdraft-ietf-rolc-nhrp-13.txtj,* Work in Progress; Mark Laubach, "Classical IP and ARP over ATM", *ATM Forum* and Andre N. Fredette (Editor), "Multiprotocol over ATM version 1.0 (baseline text version 16)", *ATM Forum.;* the ATM signalling stack is not used to setup a connection between endpoints.

First datagram of a new IP flow sets up the connection between endpoints hop-by-hop as it traverses through the ATM switches. See Arup Acharya, Rajiv Dighe, and Furquan Ansari, "IPSO-FACTO: IP switching over fast ATM cell transport", *Internet Draft, jdraft-acharya-ipsw-fast-cell-00.txtj, 1997;* Arup Acharya, Rajiv Dighe, and Furquan Ansari, "A framework for IP switching over fast ATM cell transport (IPSOFACTO)", *Proc. SPIE,* 1997; and Arup Acharya, Rajiv Dighe, and Furquan Ansari, "IP switching over fast ATM cell transport (IPSOFACTO): Switching multicast flows", *Proc. IEEE Globecom,* (1997).

### IB.1(a) Basic Operation of IPSOFACTO

The basic premise of operation for the conventional methodology followed in IPSOFACTO is that all IPSOFACTO VCs in an input port have a mapping, either to the switch control processor or to an output port. It should be noted that a switch may be configured to have VCs for IPSOFACTO, ATM signalling etc. Un-configured IPSOFACTO VCs - which can cause data to end in a black-hole are not present. All *unused VCs* on the input port of a switch are mapped to the switch control processor. Data transmitted on an unused VC always reaches the controller, which runs the complete conventional IP protocol stack, including the necessary IP routing protocols.

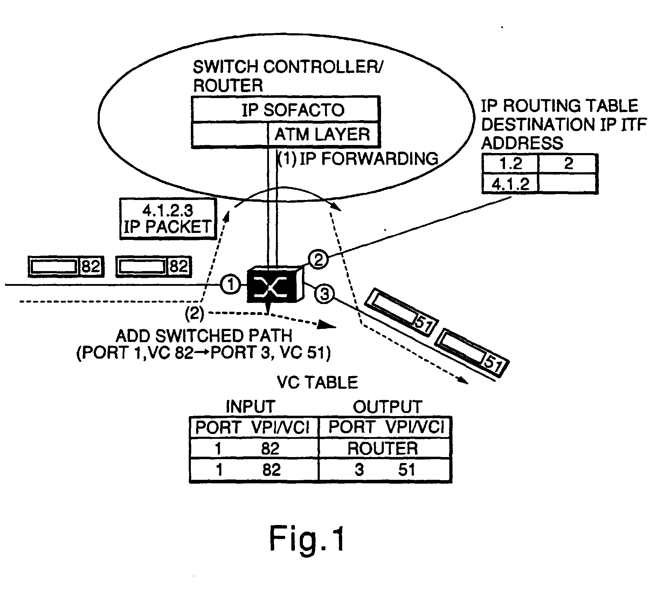

Fig. 1 shows an example of the basic operation of the above-mentioned IPSOFACTO. Each port of the switch is configured to be an IP interface. The IP routing table shown in the figure consists of routes to destination networks, 1.2 and 4.1.2, with outgoing interfaces set to interfaces 2 and 3 respectively. VC 82 on in-port i is initially mapped to the control processor.

A cell-level switched path for data forwarding in the above system is established in the following way. A sender selects an unused VC on an outgoing link to forward the first packet of a new flow. This is received by the switch processor at the downstream end of the link, which then selects outgoing link(s) based on its IP routing tables. This first packet is then forwarded by the processor on the selected outgoing links by picking an unused VC on each link.

In FIG.1, an upstream router selected VC 82 to switch a new flow: the first packet of this flow is received by the router shown, which then inspects its IP routing tablets to select an outgoing interface (3 in the present case). On interface 3, VC 51 is selected for forwarding the packet to the downstream router. Since the switch control processor has the complete information 〈input port, input VC, output port, output VC〉 necessary to switch the flow, it adds an entry into the switch VC tables. All succeeding cells are switched; eliminating the need for subsequent packet level forwarding at the control processor.

In contrast to data packets, which are switched at cell level, a switched path is never created for IP control messages. Typically, the control messages are sent and received on a predefined *control VC*. Therefore, such control messages are forwarded through all switch control processors. This mechanism is used to establish a per-flow forwarding state. Changes in the forwarding state, e.g. pruning an outgoing interface, are then used to modify the switched path (e.g., deleting an 〈out-port, VC〉 from the VC tables). When the forwarding state is removed from the control processor, the corresponding switched path is released, by marking the input and output VCs as unused.

### IC. WIRELESS ATM SYSTEM

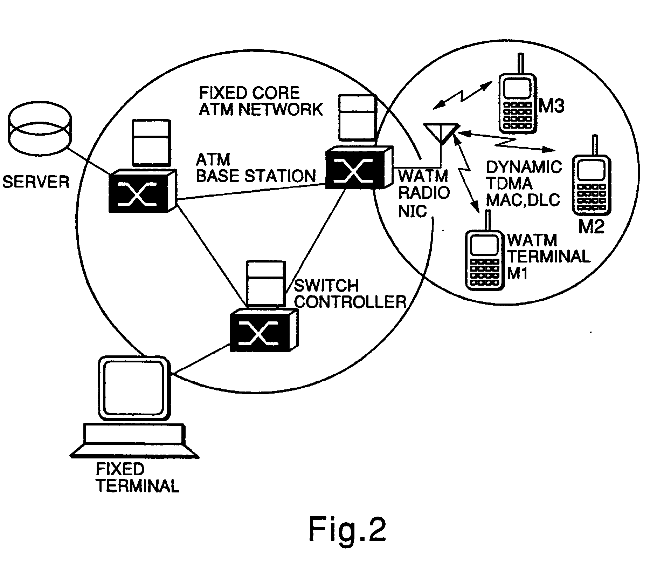

A setup of a conventional wireless ATM system is shown in FIG.2. In such a network architecture, the base-station provides connectivity to the mobile terminals via a wireless link e.g. a radio link. The base-station is also connected to the core network via wired links. Data from the wired interface to the wireless interface is cell-switched at the base-station and ATM cells (within a TDMA frame) and are carried over the radio link to the mobile terminals. This provides end-to-end ATM connectivity Each base-station can support a given number of mobiles within its domain.

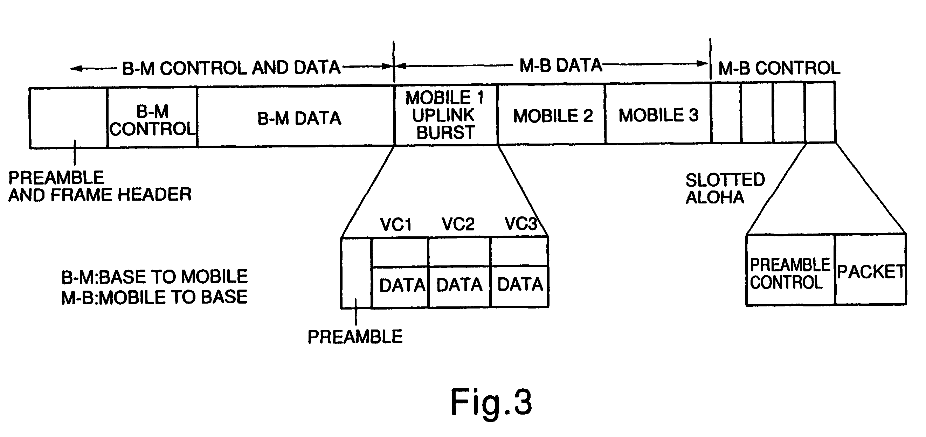

A dynamic TDMA/TDD (Fig. 3) protocol with centralized control is used for radio access on the WATM link. Downlink information from the base-station including control information and ATM cells, are multiplexed into a single burst and transmitted at the start of the TDMA frame (following the preamble and frame header). The base-station controls the allocation of slots to mobiles in the uplink. Uplink control information, which includes requests for bandwidth allocation, is sent in a slotted ALOHA contention mode. Details of the TDMA/TDD frame format are described in P. Narasimhan, S.K.Biswas, C.A.Johnston, R.J.Siracusa, and H.Kim, "Design and Performance of radio access protocol in WATMnet, a prototype wireless ATM network", *Proc. ICUPC,* 1997.

For IPSOFACTO, it is important to note that all cells on the downlink burst are received at the radio-layer at all mobile terminals. However, the MAC layer at each mobile terminal filter the received cells based on VC numbers, and forwards only those cells to the DLC layer for which a VC has been previously opened at the terminal. The uplink transmission is point-to-point and each slot carries a cell from a terminal to the base-station: the MAC layer at the base-station forwards a cell to the DLC only if the associated VC is already open. The VC space in both directions is common to all mobile terminals. In case of a conventional wireless ATM system, where the access link is shared among all mobiles, separate control VC is used for each mobile.

### IC.1. Background

Transmission of IP packets to a subset of hosts on a network is called as *multicasting*. Some main benefits of multicasting include lower network and host overhead in sending a packet to a group of receivers. Class D addresses of the IP (IPV4) address space (224.0.0.0 to 239.255.255.255) are reserved for multicast operation. A multicast address does not identify a particular IP interface in the Internet but instead identifies a group of interfaces. Multicast is well supported by local area networks such as Ethernet that provide efficient broadcast delivery and a large multicast address space.

Hardware-level filters in the network interface card filter out unwanted datagrams before they reach the IP layer. For the hardware filters to work, the network interface must convert the IP multicast group destination to a link-layer multicast address recognized by the network hardware. The Ethernet multicast address is created by mapping the lower 27 bits of the IP multicast address to the last 23 bits of the Ethernet address. *See* Gary R. Wright and W. Richard Stevens, "TCP/IP Illustrated, Volume 1: The protocols", Addisson-Wesley Publishing Co., Reading, Massachusetts (1995). In addition, multicast routing protocols are required within the network to copy and forward a packet to multiple destinations within the network.

### IC.2. Multicast on point-to-point links

Multicasting on point-to-point links using IPSOFACTO is also relatively straightforward. The first IP packet of a multicast flow arriving at the switch controller will install a forwarding cache entry in the multicast forwarding cache. The VC number and the port number (selected by the upstream switch controller) on which the packet arrived it obtained. Further, for each outgoing interface in the newly created multicast forward cache, IPSOFACTO selects an *unused VC* to forward the packet to the downstream switch controller. It then adds an entry to the switch hardware VC tables corresponding to input port, input VC -> list of output port, output VC. All subsequent packets in the flow are switched at the cell level making use of the hardware multicast capability of the ATM switching fabric.

### IC.3 Multicast on WATM links: Problem Definition

Multicasting on shared wireless access links provide some new challenges; since logically such a link is broadcast in the downlink and unicast in the uplink. Providing multicast to a subset of the mobiles requires us to use a mapping of the IP multicast address to the link-layer address similar to Ethernet. Mobiles not belonging to the multicast group need to filter out unwanted data appropriately at the hardware level. The link-layer identifier for (wireless) ATM is a virtual channel (VC) number. A mapping of the IP multicast address to a VC number is required to achieve the desired result.

Another issue in a wireless ATM system is that the effective transport layer throughput needs to be improved. Since the bit error rate (BER) of a radio link is much higher than that of a fixed ATM network, a cell-level error recovery mechanism is needed to prevent a degradation of the packet-level throughput. The cell-level recovery mechanisms for different classes of traffic for unicast connections is discussed in H. Xie, P. Narasimhan, R. Yuan, and D. Raychaudhuri, "Data link control protocols for wireless ATM access channels", *Proc. ICUPC,* 1995. Mapping IP multicast flows to multicast VCs (using UBR) requires extending the cell-level error recovery (and cell-sequencing) mechanism to handle multiple recipients.

Conventional methodologies at least has the following problems:
- They cannot handle wireless ATM links to mobile terminals. Such wireless ATM links are essential to realize the full potential of conventional technologies like IPSOFACTO.
- Internet Group Management Protocol (IGMP) is inadequate. *See* W.Fenner, "Internet group management protocol, version 2", *Internet Working Group Request for Comments 2236* (Nov. 1997). Further extensions and a scheme to reduce unnecessary multicast traffic between the base-station and the mobiles are required.
- The cell-level error recovery mechanism is inadequate to handle multiple recipients.

### II. SUMMARY OF THE INVENTION

It is an objective of this invention to provide multicasting on wireless ATM links to mobile terminals and solve the above-mentioned problems.

To meet the above-mentioned objectives there is provided a network system having a predetermined protocol for transmitting a packet flow through an ATM network to a destination, said system comprising a source for transmitting a sequence of ATM cells using an unused Virtual Channel Identifier (VCI); and a node comprising a router, and an ATM switch, wherein said router associates one of plurality of output ports with the unused VCI without using hop by hop massaging, thereby setting a switched path, wherein said ATM switch transports ATM cells through said one of said plurality of the output ports without control of the router when each of the ATM cells has a VCI identical with the unused VCI, wherein multicast Virtual Channels (VCs) are obtained by mapping addresses corresponding to IP multicast groups to VC numbers corresponding to said multicast VCs, and wherein at least one base station uses said mapping to provide VC numbers to new mobiles joining one of said IP multicast groups.

Improvements include the system wherein a base-station decides a correspondence between VCs and mobiles. Still further improvements include the system wherein a uni-directional broadcasts VC from the base-station to mobiles and bi-directional control VCs between the base-station and the mobiles for sending control messages are pre-configured.

Preferably the system has a control protocol between the base-station and mobiles comprising a VC REQUEST and a VC RECLAIM control messages, wherein said VC REQUEST message is used by a mobile to request the base-station for a VC to send data, and wherein said VC RECLAIM message is used by the base-station to reclaim the VC assigned to the mobile.

Further improvements include the system wherein the base-station uses a timer to determine activity in a VC and reclaims the VC on said timer expiring.

Yet another improvement is a system wherein the base-station can detect packet boundaries and merge multiple flows into a single VC.

Yet another improvement is a system wherein the base-station maintains mappings between sender IP address, multicast group address and VC number. Preferably the base-station periodically broadcasts the mappings, wherein mobiles not interested in a message drop said message at IP level, and wherein mobiles interested in a message open corresponding VCs. More preferably said broadcasts are sent along IGMP Host Membership Query message.

Yet another improvement is a system wherein Internet Group Management Protocol (IGMP) is extended such that queries in the form of downlink IGMP messages are transmitted on the broadcast VC, wherein multicast mobiles receive said IGMP messages and generate appropriate reports, and wherein nonmulticast mobiles drop said IGMP messages at IP level.

Yet another improvement is a system wherein Internet Group Management Protocol (IGMP) is extended such that reports in the form of uplink IGMP messages are transmitted on the unicast control VC, wherein the base-station rebroadcasts said IGMP messages so that all mobiles receive said IGMP messages,wherein mobiles other than a mobile that send the IGMP message reset timers for preventing more reports being generated.

Another aspect of this invention is a multicast flow system for transporting multicast traffic across a radio layer, wherein a data link control protocol (DLC) uses a negative acknowledgment (NACK) scheme, where a receiver sends a NACK along with a bitmap vector only when said receiver has lost cells or said receiver has received corrupted cells. Further improvements includes the system wherein timers are used to prevent deadlock, wherein transmitted cells are stored in buffers until said timers expire and said buffers are cleared after said timers expire. Preferably receivers maintain receiver timers when a loss is detected, the receiver timers having a timeout value approximately the same as timeout values of the timers that are used to prevent deadlock. More preferably receivers request retransmission until expiry of said receiver timers.

Improvements include the system wherein transmitters have gratuitous acknowledgment timers having timeout values approximately half the timeout values of the receiver timers, wherein the transmitters resets the gratuitous acknowledgment timers when there is more data to send, and wherein the transmitters send a gratuitous ACK message after the transmitter has transmitted last group of cells. Preferably when the receiver receives the gratuitous ACK message containing sequence numbers of transmitted cells, the receiver determines if a cell loss occurred and send back a NACK message indicating that a cell loss has occurred.

Another aspect of the present invention is a wireless ATM system wherein a VC space is divided into unicast VCs, broadcast VCs and multicast VCs. Improvements include the system wherein unicast IP addresses are mapped to said unicast VCs.

Another improvement is a system wherein multicast IP addresses are mapped to said multicast VCs.

Yet another improvement is a system wherein broadcast IP addresses are mapped to said broadcast VCs.

Another aspect of the present invention is a method of joining a multicast group for a mobile, said method comprising: initiating contact with the base-station over a wireless control channel; receiving a response at the mobile, wherein said response comprises a broadcast VC number and a unicast control VC number that the mobile should use; sending an IGMP join message on the control VC; searching a base-station database to see if a mapping of 〈group, VC number〉 exists; picking a VC from available VC pool and creating for a said VC 〈multicast group, VC number〉 and storing information in the database if said mapping does not exist; providing the existing mapped VC if said mapping exists; transmitting 〈group address, VC number〉 to the mobile over broadcast VC; opening the VC corresponding to the mapping 〈multicast group, VC number〉 for data reception.

Further improvements include the method further comprising: sending a host membership query on the broadcast VC (255); dropping this message if a mobile does not belong to a multicast group; starting a report delay timer with a randomly chosen expire value if a mobile belongs to the corresponding multicast group; sending a host membership report on the broadcast VC if said timer expires; rebroadcasting the host membership report; and resetting the timer and not generating the report on receiving the rebroadcast.

Another aspect of the present invention is a method of leaving a multicast group for a mobile, said method comprising: sending an IGMP leave message to base station using control VC, decrementing a counter associated with a corresponding VC, checking to see if said counter has reached zero, continuing transmission on the VC if counter has not reached zero, closing corresponding VC for the mobile and sending a prune message if all the counters go below zero.

Yet another aspect of the present invention is a method of mapping mobiles with multicast groups for use in deleting said mobiles from said multicast groups said method comprises maintaining a database of all mobiles associated with the multicast group and mapping a multicast group with a subset of all mobiles joining the multicast group.

Still another aspect of the present invention is a method of mapping mobiles with multicast groups for use in deleting said mobiles from said multicast groups said method comprise mapping a multicast group with a counter, wherein the counter is incremented when a mobile joins the multicast group and decreased when the mobile leaves the multicast group.

Still another aspect of the present invention is a method of mapping mobiles with multicast groups for use in deleting said mobiles from said multicast groups said method comprises implicitly assuming presence of mobiles from multicast outing protocol and sending prune message upstream when no mobiles are associated with a multicast group.

### III. LIST OF FIGURES

The above objectives and advantages of the present invention will become more apparent by describing in detail preferred embodiments thereof with reference to the attached drawings in which:
Fig. 1 shows an example of a conventional IPSOFACTO operation.
Fig. 2 shows a conventional setup of a wireless ATM system.
Fig. 3 shows the TDMA/TDD Frame format for use in wireless ATM.
Fig. 4 shows a logical representation of the Data Link Control Protocol for Multicast Traffic.

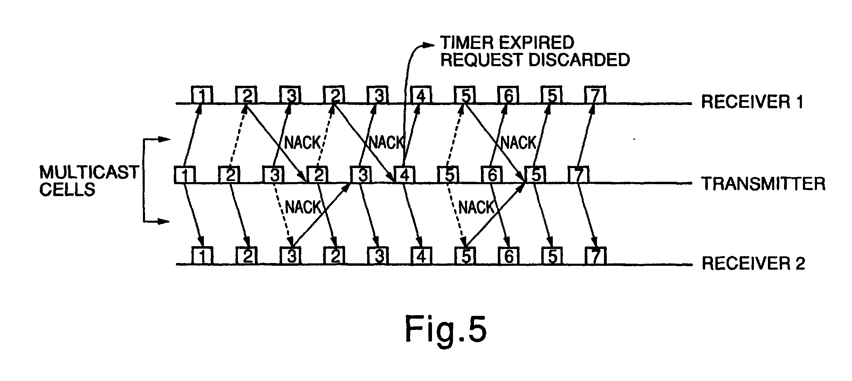

Fig. 5 shows a selective retransmission mechanism.
Fig. 6 shows timing information for the NACK based mechanism

### IV. DETAILED DESCRIPTION OF THE PREFERRED EMBODIMENT

The preferred embodiment of the present invention is an extension to the IPSOFACTO system described in detail in U. S. Patent Application No. 09/080,208 by Acharya et al. A key component in such a conventional IPSOFACTO is the ability to select an unused VC for a new IP flow. In case of a bidirectional point-to-point link, it is east to do the selection because all unused VCs point to the only terminal/switch at the other end of a link.

On the other hand, a wireless ATM link in the WATMnet system supports multiple mobile terminals. Such a wireless link has a broadcast downlink and unicast uplink. *See* D. Raychaudhuri, L. J. French, R. J. Siracusa, S. K. Biswas, R. Yuan, P. Narasimhan, and C. A. Johnston, "WATMnet: A prototype wireless ATM system for multimedia personal communication", *IEEE Journ. Select. Areas Commun.,* Jan. 1997.

### IVA. WATM Extensions to IPSOFACTO: IPSOFACTO^{+W}

IPSOFACTO VCs on the wireless link are classified into unicast VCs, multi-cast VCs and broadcast VCs for supporting different types of traffic, according to the present invention. Data transmitted on a unicast VC is received by only one mobile. Likewise, data transmitted by a broadcast VC is received by all the mobiles. On the other hand, data transmitted on a multicast VC is received by only a subset of mobiles.

A multicast VC is obtained by mapping IP multicast group addresses to VC numbers. Such a mapping is done when a mobile joins a multicast group for the first time. Using this mapping, of 〈IP multicast group address, VC〉, the base-station provides other mobiles with the VC number to use when they join the same IP multi-cast group. A one-to-one mapping is maintained between VCs and IP multicast group addresses.

The asymmetric nature of the wireless ATM access link, requires modifications to the IPSOFACTO protocol for proper multicast operation. Since the same VC space is used by all the mobiles at a given base-station, VCs cannot be prepared beforehand for data reception. A control protocol between the base-station and a mobile is used. In such a control protocol, the base-station decides the VC that a mobile should use.

Note that such a control protocol may not be required for supporting unicast traffic. This is because, the VC space is partitioned and assigned to each mobile without causing any conflicts. Such a partitioning is not done when multicasting since mobiles can join and/or leave a multicast session dynamically.

The IPSOFACTO setup on the WATM terminals has the following VCs pre-configured:
- A uni-directional broadcast VC - from base-station to the mobiles.
- Bi-directional unicast *control* VCs between the base-station and the mobiles. These control VCs are used to send control messages.

The control protocol between a base-station and mobiles consists of a *VC REQUEST* and *VC RECLAIM* control messages. A *VC REQUEST* message is used by a mobile to request the base-station to provide a VC for sending data. A *VC RECLAIM* message is used by the base-station to reclaim the VC given to the mobile. The base-station typically uses a timer to determine the VC activity and sends a *VC RECLAIM* when the timer expires, i.e., when no activity occurs on that VC.

When more than one senders exist in the same multicast group additional features are incorporated. If the same VC for the multicast group, despite the number of senders, is used a base-station that can detect packet (frame) boundaries and merge multiple flows into a single VC is required. When such a VC-merge capable base-station is unavailable, a different VC is used for every sender in the multicast group. In such a case, the base-station maintains a mapping of 〈sender IP addresses, Multicast group address, VC #〉. This implies that each mobile now open multiple VCs for the same IP multicast group.

To improve the reliability, the base-station periodically broadcasts the mappings. Such a broadcast is typically sent along with the IGMP Host Membership Query message. Mobiles not interested in this message simply drops it at the IP level. Having a 〈source, group,VC〉 mapping is useful when using IGMPv3, where a receiver can choose to receive multicast traffic only from a particular set of senders. A mobile interested in a particular set of senders only needs to open the corresponding VCs for reception.

### IVB. Extensions to IGMP: IGMP^{+W}

Modifications and extensions to the Internet Group Management Protocol (IGMP) are modified according to the present invention suitably to work in the wireless ATM environment. IGMP is conventionally used by IP hosts to report their host group memberships to any immediately-neighboring multicast router. In a wireless ATM system, the base-station itself could be a multicast router or could be a hop away from a traditional IP router and act as a proxy.

A case where the base-station itself is a multicast router is considered hereunder.

Multicast routers send *Host Membership Query* messages to discover which host groups have members on their attached local networks. Queries are addressed to the all-hosts group (address 224.0.0.1), and carry an IP TTL (time-to-live) of 1. Hosts respond to a Query by generating *Host Membership Reports,* reporting each host group to which they belong on the network interface from which a Query was received. To avoid an *implosion* of concurrent Reports and to reduce the total number of Reports transmitted, conventional IGMP uses two techniques:
1. A randomly-chosen delay timer value. Response to a Query is generated when the timer expires. This helps spreading out the responses in time.
2. The response Report is addressed to the host group address with TTL set to 1. Other members of the same group on the same network can overhear the Report and suppress from generating another Report for that group. This reduces the IGMP overload.

To achieve similar behavior on a wireless ATM system, the following modifications/extensions to IGMP are made according to the present invention:
1. Downlink IGMP messages (Queries) are transmitted on the broadcast VC (from the base-station to the mobiles). All multicast capable mobiles (Hosts) receive the IGMP and Query messages and generate appropriate Reports. Non-multicast capable mobiles may also receive these messages, but these massages are dropped at the IP level.
2. Uplink IGMP messages (Reports) are transmitted on the same unicast *control* VC. On receiving the Reports, the base-station rebroadcasts them so that other mobiles can receive the Report generated by a host (mobile) belonging to a multicast group. If another host is a member of the same group, it resets its timer, keeping it from generating another Report.

### IVC. New mobile joining or leaving a multicast group

The steps involved in performing a multicast operation where a new mobile joins the wireless ATM system according to a preferred embodiment is provided herein. Referring to figure 2 ,M1,M2 and M3 are three mobiles currently associated with the base-station. The method will be described considering a case where mobiles M1 and M2 join a multicast group, for example 225.1.1.1, receive multicast data and finally leave the group.

The base-station needs to decide when to add or delete a mapping from its database, so that the mobiles can join or leave a group properly. Adding a new entry is relatively easy. When a mobile joins a multicast group and a mapping for this group doesn't already exist in the database, a new entry is added. However, deciding when to delete an entry from the database, the base-station needs to be sure that no more mobiles are associated with that particular multicast group address. In order to obtain such information, the base-station can maintain the mapping database in three different ways.
1. Mapping of Source IP address, 〈Multicast Group Address, VC Number〉, List of Mobile IP addresses joining this group.
2. Mapping of Source IP address, 〈Multicast Group address, VC number〉, Counter (or flag).
3. Mapping of Source IP address, 〈Multicast Group address, VC number〉.

In the first case, a complete database of all the mobiles associated with the multicast group is maintained. Having a complete mapping provides a lot of flexibility and functionality but has the advantage of increased complexity of maintaining the database.

In the second case, the base-station simply maintains a counter that is incremented when a mobile joins that group and decreased when it leaves the group. When all mobiles have left the group, the counter would be zero and the entry can be safely deleted from the group. Note that, it may not even be necessary to keep track of how many mobiles are currently associated with that group address. One may simply use a flag (states 0 and 1) that is set to 1 as long as at least one mobile is preset and set to zero (reset) when no mobiles are present.

In the third case, the information about the presence of mobiles associated with that particular multicast group address can be implicitly assumed from the multicast routing protocol. When no mobiles are associated with the multicast group, the base-station (also a multicast router) sends a prune message to the upstream router to prune multicast traffic for that group. This message is generated by the multicast routing protocol only when there are no hosts (mobiles) associated with that multicast group. This can be used to trigger the deletion of the entry from the database.

Assuming IGMPv2 or greater, the following sequences of operation take place:
- When a mobile enters the area controlled by a base-station (commonly referred to as a *Cell*), it initiates contact with the base-station over the wireless *control channel*, which is a radio level communication mechanism.
- The base-station responds by providing, along with other information, a broadcast VC number and a unicast *control VC* number that the mobile should use.
- Mobile M1 decides to join the IP multicast group 225.1.1.1. It sends an IGMP join message on the control VC. If PIM-Dense Mode multicast routing protocol is used, the base-station generates a *Graft* message and sends it to the upstream router.
- The base-station then searches its database to see if a mapping of 〈group, VC number〉 exists. If it does not, the base-station picks a VC from the available *VC pool* and maps it to the multicast group address and stores the information in the database. This information (〈group address, VC number〉) is transmitted to the mobile over the broadcast VC.
- On receiving the mapping, the mobile opens the given VC for data reception. Note that other mobiles receiving this information simply discard it.
- If mobile M2 decides to join the same group (225.1.1.1), it sends the join message to the base-station. When the base-station receives this message, it searches its database for the 〈group,VC〉 mapping. Since such a mapping already exists, the same VC number is given to the mobile. Mobile M2 opens this VC for data reception.
- The base-station periodically sends a *Host Membership Query* on the broadcast VC (255). All hosts other than M1 and M2 will drop this message. When M1 and M2 receive this message, they start a *Report delay timer* with a randomly chosen expire value. To reduce the probability of the hosts picking up the same delay value, the RFC recommends using the host's own IP address as part of the seed for the pseudo-random number generator. *See* Gary R. Wright and W. Richard Stevens, *TCP/IP illustrated, Volume 1: The Protocols,* Addison-Wesley Publishing Company, Reading, Massachusetts, 1995.
- When the timer on one of the mobile expires, it generates a *Host Membership Report* and sends it on the broadcast VC. The base-station receives this message and (re)broadcasts it. When the other mobile receives this message, it resets its timer and does not generate a Report.
- The base-station transmits multicast data for the group (225.1.1.1) on the VC obtained from the 〈group,VC〉 mapping. Since both mobiles M1 and M2 have opened the same VC for reception, both receive the multicast data; all others discard it.
- IGMP *Leave* operation takes place in a similar manner.

### IVD. DATA LINK CONTROL FOR MULTICAST FLOWS

A preferred embodiment of Data-link control (DLC) protocol for transporting *multicast traffic* across the radio (physical) link is described hereunder. Such a protocol reduces cell error rate and provides sequential cell delivery, necessary for obtaining a higher transport layer throughput. It has been shown that the use of a data link control protocol improves the effective throughput for unicast traffic. *See* P. Narasimhan, S.K. Biswas, C.A. Johnston, R.J. Siracusa and H.Kim, "Design and performance of radio access protocol in WATMnet, a prototype wireless ATM network"*, Proc. ICUPC* (1997) and H. Xie, P. Narasimhan, R. Yuan, and D. Raychaudhuri, "Data link control protocols for wireless ATM access channels", *Proc. ICUPC*, 1995.

Although, IP multicast traffic is UDP based, where packet losses do not matter, an effective throughput is greatly increased if cell level recovery is employed. Such an increase results because, even with a single loss of an ATM cell, the entire UDP datagram is discarded due to packet corruption and failed CRC. Recovering the lost cell could restore the entire packet and improve the overall transport layer throughput.

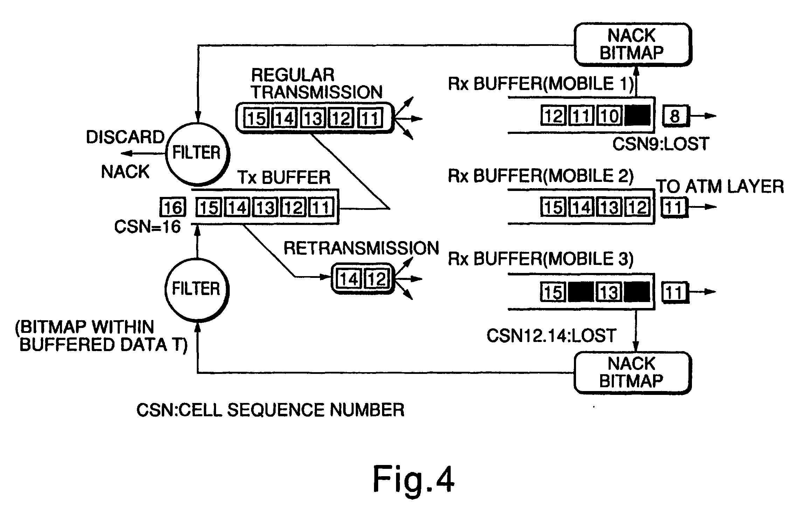

Data link control protocol for unicast flows uses a *positive group acknowledgment scheme* for error recovery. The receiver sends a group acknowledgment packet with a bitmap vector, indicating the error status of the received cells. On receiving the acknowledgment, the transmitter analyzes the bitmap vector and selectively retransmits the lost cells. However, using such a mechanism for multicast traffic can easily overwhelm the transmitter with acknowledgment traffic. To avoid such an event, a *negative acknowledgment* (NACK) scheme is used, where a receiver sends a NACK, along with the bitmap vector, only when it has lost cells or has received corrupted cells (Fig. 4). Upon reception of a negative acknowledgment packet, the transmitter executes a selective retransmission algorithm for recovering the erroneous cells. Note that the DLC execution takes place in a per-VC mode and requires both the base and the terminal to keep separate DLC state information on a per-VC basis. Further, since the base-station can distinguish between a unicast VC and a multicast VC, it knows the right mechanism to use (ACK or NACK based) for error recovery.

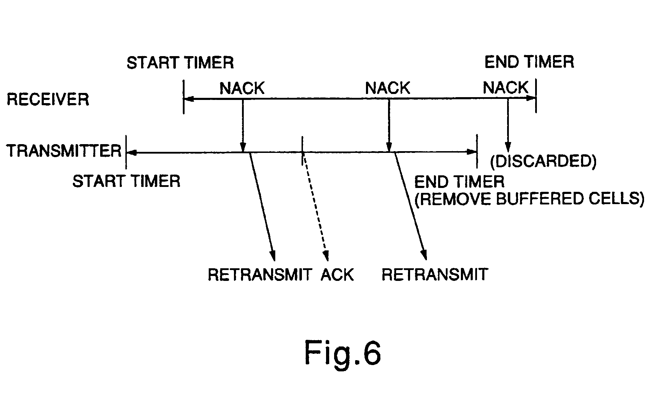

When many mobiles belong to the same multicast group, operating under various error-prone conditions (such as fading etc.), it is possible that the base-station is overwhelmed with repeated retransmission requests. This could prevent the base-station from transmitting new multicast data, since it is busy responding to the retransmission requests. To prevent a deadlock from occurring timers are used according to the present invention. Transmitted cells are buffered until the timer expires, after which the buffer is cleared (Fig. 6). Receivers request retransmission of the cell(s) intended for their receipt as long as the transmitter timer has not expired. All retransmission requests are discarded once the transmitter timer has expired. The receivers maintain a timer of their own; which is started when they detect a cell loss. The timeout value of this timer is approximately the same as the timeout value of the transmitter timer. The receiver requests cell retransmission as long as the receiver timer has not expired, after which the receivers simply assume the data to be lost and no longer request retransmission for that group of cells. This is necessary because, although the transmitter may not respond to any retransmission requests when its timer expires, the receiver may continue to request retransmission of lost cells (with no avail).

The transmitter has an additional timer whose timeout value approximately half the retransmit timer expire value. This timer is used for sending a *gratuitous acknowledgment* when it expires. This is useful when no more cells remain to be transmitted or when there is a long gap in the data stream. Since a NACK based mechanism for error recovery is used, a way of informing the receivers that the cells were transmitted is required. Normally, when there are more data to send, the transmitter resets the *gratuitous ack* timer, since the reception of the subsequent cells by the receivers is an indication that the previous group of cells were lost. The receiver generates an appropriate NACK packet with the right bitmap vector to recover the lost cells,. Nevertheless, when the transmitter has transmitted the last group of cells (or the group before a long gap), cell loss may go undetected by the receivers, since it does not know that they were transmitted at all. In such cases, the transmitter sends *a gratuitous ACK*, indicating that a group of cells were transmitted. If a receiver receives a *gratuitous ACK* containing the sequence numbers of the transmitted cells, it can determine if a cell loss occurred and send back a NACK indication. Note that the reason for having a smaller timeout value is to give the receivers a chance for generating a NACK and recovering the lost cells before the retransmit timer expires.

### V. CONCLUSIONS

In this invention a mechanism for providing IP multicast for wireless ATM system is provided. To differentiate different types of traffic, VCs are classified into unicast, multicast and broadcast VCs. A control protocol between the base-station and mobiles is used to provide the mobiles with the appropriate multicast VC number to use when joining a particular IP multicast group. Small modifications/extensions to the IGMP protocol are provided, specifically to be used in wireless ATM systems. Finally, to improve the effective throughput at the transport layer, a data link control protocol with negative acknowledgment is described.

Other modifications and variations to the invention will be apparent to those skilled in the art from the foregoing disclosure and teachings. Thus, while only certain embodiments of the invention have been specifically described herein, it will be apparent that numerous modifications may be made thereto without departing from the spirit and scope of the invention.

## Claims

1. A network system having a predetermined protocol for transmitting a packet flow through an ATM network to a destination, said system comprising:
a source for transmitting a sequence of ATM cells using an unused Virtual Channel Identifier (VCI); and
a node comprising a router, and an ATM switch,
wherein said router associates one of a plurality of output ports with the unused VCI without using hop by hop massaging, thereby setting a switched path,
wherein said ATM switch transports ATM cells through said one of a plurality of output ports without control of the router when each of the ATM cells has a VCI identical to the unused VCI,
wherein multicast Virtual Channels (VCs) are obtained by mapping addresses corresponding to IP multicast groups to VC numbers corresponding to said multicast VCs, and
wherein at least one base-station uses said mapping to provide VC numbers to new mobiles joining one of said IP multicast groups.

2. The system of claim 1 wherein the base-station decides a correspondence between VCs and mobiles.

3. The system of claim 1 wherein a uni-directional broadcast VC from the base-station to mobiles and a bi-directional control VCs between the base-station and the mobiles for sending control messages are pre-configured.

4. The system of claim 1 wherein control protocol between the base-station and mobiles comprises a VC REQUEST and a VC RECLAIM control messages,
wherein said VC REQUEST message is used by a mobile to request the base-station for a VC to send data, and
wherein said VC RECLAIM message is used by the base-station to reclaim the VC assigned to the mobile.

5. The system of claim 1, wherein said base-station is capable of detecting packet boundaries and merge multiple flows into a single VC.

6. The system of claim 1, wherein said base-station maintains mappings between sender IP address, multicast group address and VC number.

7. The system of claim 1, wherein Internet Group Management Protocol (IGMP) is extended such that queries in the form of downlink IGMP messages are transmitted on broadcast VC,
wherein multicast mobiles receive said IGMP messages and generate appropriate reports, and
wherein nonmulticast mobiles drop said IGMP messages at IP level.

8. The system of claim 1, wherein Internet Group Management Protocol (IGMP) is extended such that reports in the form of uplink IGMP messages to a base station are transmitted on a unicast control VC,
wherein the base-station rebroadcasts said IGMP messages so that all mobiles receive said IGMP messages, and
wherein mobiles other than a mobile that send an IGMP message reset timers for preventing more reports being generated.

9. The system of claim 4, wherein the base-station uses a timer to determine activity in a VC activity and reclaims the VC on said timer expiring.

10. The system of claim 6, wherein the base-station periodically. broadcasts the mappings, wherein mobiles not interested in a message drop said message at IP level, and wherein mobiles interested in a message open VCs corresponding to said message.

11. The system of claim 10, wherein said broadcasts are sent along IGMP Host Membership Query message.

12. A multicast flow system for transporting multicast traffic across a radio layer, wherein a data link control protocol (DLC) uses a negative acknowledgement (NACK) scheme, where a receiver sends a NACK along with a bitmap vector only when said receiver has lost cells or said receiver has received corrupted cells.

13. The system of claim 12 wherein timers are used to prevent deadlock, wherein transmitted cells are stored in buffers until said timers expire and said buffers are cleared after said timers expire.

14. The system of claim 13 wherein receivers maintain receiver timers when a loss is detected, the receiver timers having a timeout value approximately the same as timeout values of the timers that are used to prevent deadlock.

15. The system of claim 14 wherein receivers request retransmission until expiry of said receiver timers.

16. The system of claim 14 wherein transmitters have gratuitous acknowledgement timers having timeout values approximately half of timeout values associated with the receiver timers,
wherein the transmitters resets the gratuitous acknowledgement timers when there is more data to send, and
wherein the transmitters send a gratuitous ACK message after the transmitter has transmitted last group of cells.

17. The system of claim 16, wherein when the receiver receives the gratuitous ACK message containing sequence numbers of transmitted cells, the receiver determines if a cell loss occurred and send back a NACK message indicating that a cell loss has occurred.

18. A wireless ATM system wherein a VC space is divided into unicast VCs, broadcast VCs and multicast VCs.

19. The system of claim 18 wherein unicast IP addresses are mapped to said unicast VCs.

20. The system of claim 18 wherein multicast IP addresses are mapped to said multicast VCs.

21. The system of claim 18 wherein broadcast IP addresses are mapped to said broadcast VCs.

22. A method of joining a multicast group for a mobile, said method comprising:
(a) initiating contact with a base-station over a wireless control channel;
(b) receiving a response at the mobile, wherein said response comprises a broadcast VC number and a unicast control VC number that the mobile should use;
(c) sending an IGMP join message on the control VC;
(d) searching a base-station database to see if a mapping of 〈multicast group, VC number〉 exists;
(e) picking a VC from available *VC pool* and creating a mapping for said VC 〈multicast group, VC number〉 and storing information in the database if said mapping does not exist in step d;
(f) providing the existing mapped VC if said mapping exists in step d;
(g) transmitting 〈multicast group address, VC number〉 to the mobile over broadcast VC; and
(h) opening the VC corresponding to the mapping 〈multicast group VC number〉 for data reception.

23. The method of claim 22 further comprising:
i) sending a host membership query on the broadcast VC;
j) dropping message if a mobile does not belong to a multicast group;
k) starting a report delay timer with a randomly chosen expire value if a mobile belongs to the corresponding multicast group.
l) sending a host membership report on the broadcast VC if said timer expires;
m) rebroadcasting the host membership report; and
n) resetting timer and not generating report on receiving the rebroadcast of step m.

24. A method of leaving a multicast group for a mobile, said method comprising:
(a) sending an IGMP leave message to base station using control VC;
(b) decrementing a counter associated with a corresponding VC;
(c) checking to see if said counter has reached zero;
(d) continuing transmission on the VC in step b if counter has not reached zero in step c;
(e) closing corresponding VC for the mobile; and
(f) sending a prune message if all counters go below zero;

25. A method of mapping mobiles with multicast groups for use in deleting said mobiles from said multicast groups said method comprises maintaining a database of all mobiles associated with the multicast group and mapping a multicast group with a subset of all mobiles joining the multicast group.

26. A method of mapping mobiles with multicast groups for use in deleting said mobiles from said multicast groups said method comprise mapping a multicast group with a counter, wherein the counter is incremented when a mobile joins the multicast group and decreased when the mobile leaves the multicast group.

27. A method of mapping mobiles with multicast groups for use in deleting said mobiles from said multicast groups said method comprises implicitly assuming absence of mobiles when a prune message is sent upstream.
